# EUROPÄISCHE PATENTANMELDUNG

(11) **EP 1 811 513 A1**
(43) Veröffentlichungstag der Anmeldung: **25.07.2007**
(21) Anmeldenummer: 05028041.1
(22) Anmeldetag: 21.12.2005
(51) Int. Cl.: G11B 7/24

(54) **Datenträger mit Barriereschicht gegen eindringende Feuchtey**

(71) Anmelder: Singulus Technologies AG, 63796 Kahl/Main (DE)
(72) Erfinder: Sichmann, Eggo, 63571 Gelnhausen (DE)
(74) Vertreter: Vossius & Partner

(57) **Zusammenfassung**

Die vorliegende Erfindung betrifft einen Datenträger, insbesondere einen optischen Datenträger, dessen Verformung aufgrund einer Änderung der Umgebungsluftfeuchte minimiert beziehungsweise eliminiert wird. Ein solcher Datenträger mit einer Substratschicht (1), mindestens einer auf der Leseseite (1a) der Substratschicht (1) angeordneten reflektierenden Schicht (2), die reflektierend oder teilreflektierend ist, und mindestens einer auf der Leseseite (1a) der reflektierenden Schicht (2) angeordneten Schutzschicht (3), weist eine auf der der Leseseite (1a) der Substratschicht (1) abgewandten Nicht-Leseseite (1b) angeordnete feuchtigkeitsundurchlässige und/oder nicht feuchteabsorbierende Barriereschicht (4) auf.

## Beschreibung

Die vorliegende Erfindung betrifft einen Datenträger, insbesondere einen optischen Datenträger, dessen Verformung aufgrund einer Änderung der Umgebungsluftfeuchte minimiert beziehungsweise eliminiert wird.

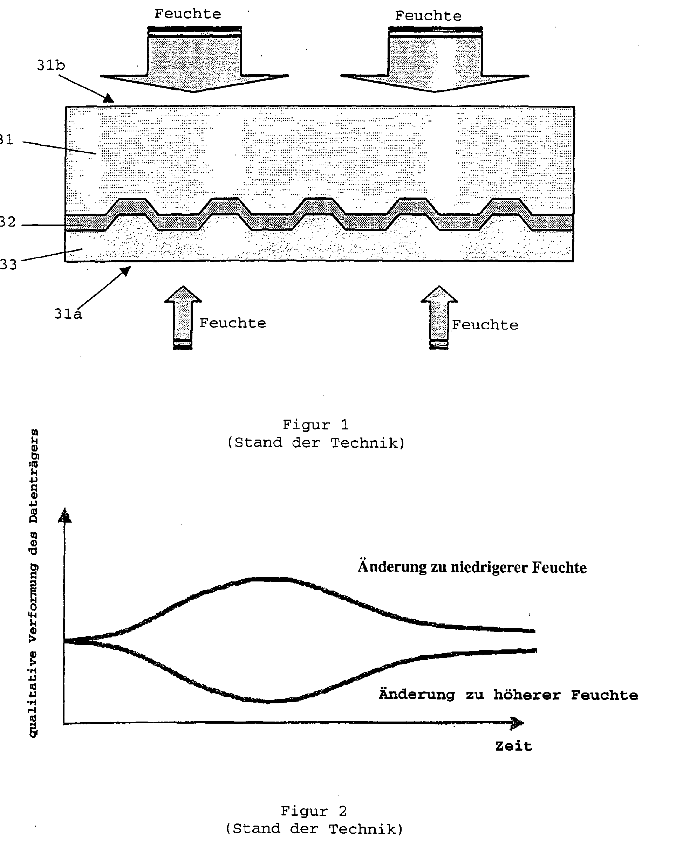

Herkömmliche Datenträger, wie beispielhaft in Figur 1 gezeigt, weisen eine Substratschicht 31, mindestens eine auf der Substratschicht 31 angeordnete reflektierende Schicht 32, die reflektierend oder teilreflektierend ist, und mindestens eine auf der Leseseite 31a der reflektierenden Schicht 32 angeordnete Schutzschicht 33 auf. Erhöht sich die Luftfeuchte in der direkten Umgebung des Datenträgers, so absorbieren das Substrat 31 und die Schutzschicht 33 unterschiedlich schnell unterschiedliche Volumina dieser Feuchte, weshalb es zu einer unterschiedlichen Volumenzunahme der Schichten kommt. Dies führt zu einer zumindest temporären Verformung des Datenträgers. Die Verformung bildet sich zum Großteil, jedoch nicht vollständig, nach einer Akklimatisierung des Datenträgers wieder zurück.

Derartige Verformungen führen zur Verbiegung des Datenträgers und damit zu kosmetischen und funktionellen Beeinträchtigungen. Die einzelnen Schichten können zueinander verschoben werden, was z.B. zu Parallaxen des Druckbildes führen kann. Es können auch Risse im Material des Datenträgers durch die Verformung der Schichten entstehen. Als Folge können Schichten in ihren optischen Eigenschaften beeinträchtigt werden. So kann eine transparente Schicht getrübt werden, was nicht nur als kosmetische Beeinträchtigung zu werten ist, sondern zu einer schlechteren Lese- und/oder Schreibfähigkeit von Daten, auch nachdem sich die Verformung weitgehend zurückgebildet hat, führt. Wenn die Verformung ein gewisses Maß überschreitet, kann im Falle eines optischen Datenträgers der Laser nicht mehr fokussiert werden, so dass Daten nicht mehr gelesen oder geschrieben werden können. Auch während der Lagerung eines Datenträgers bei sich verändernden Umgebungsbedingungen kann durch die sich ändernde Durchbiegung des Datenträgers und der damit verbundenen Nachteile über längere Zeit bis zur Unbenutzbarkeit des Datenträgers und somit zum Verlust der gespeicherten Daten führen.

In Figur 2 ist die Verformung eines herkömmlichen Datenträgers qualitativ über der Zeit bei sich ändernden Umgebungsbedingungen dargestellt. Die Durchbiegung des Datenträgers kann in beide Richtungen stattfinden, je nachdem ob die Luftfeuchte vermindert oder erhöht wird. Wie an dem gemeinsamen Anfangspunkt und den verschiedenen Endpunkten der oberen und der unteren Kurve ersichtlich ist, bildet sich die Verformung des Datenträgers nicht vollständig zurück, was zu den oben diskutierten Problemen führen kann. Die Darstellung der beiden Kurven dient lediglich der Verdeutlichung, dass es sich hier um einen nicht vollständig reversiblen Prozess handelt.

Wird die Umgebung des Datenträgers so verändert, dass sich die Feuchte erhöht, so ist die Volumenzunahme des Substrats 31 mit der Zeit schneller als die der Schutzschicht 33 aufgrund unterschiedlicher Absorptionseigenschaften. Dadurch bildet sich ein Feuchte-Gradient innerhalb des Substrats aus, was zur Verbiegung des Datenträgers führt. Die Volumenzunahme der Schichten 31 und 33 gleicht sich dann bei stabilen Umgebungsbedingungen mit der Zeit wieder fast ganz aus, d.h. die Verformung des Datenträgers bildet sich weitestgehend, jedoch nicht vollständig, zurück. Bei einer Veränderung der Umgebung des Datenträgers hin zu niedrigerer Feuchte verformt sich der Datenträger entsprechend in die entgegengesetzte Richtung. Dieser Verformungseffekt kann sowohl während des Produktionsprozesses als auch zu jedem späteren Zeitpunkt auftreten.

Unter Berücksichtigung des stetigen Trends immer mehr Informationen auf weniger Fläche eines Datenträgers zu speichern, um somit eine höhere Integration der Information zu erreichen, werden die Leistungseinbußen durch die Beeinträchtigung der optischen Eigenschaften des Datenträgers, z.B. in der Lesefähigkeit eines solchen Datenträgers, immer deutlicher.

Der vorliegenden Erfindung liegt die Aufgabe zugrunde, einen verbesserten Datenträger bereitzustellen, dessen Verformung aufgrund von Veränderung der Luftfeuchte minimiert beziehungsweise eliminiert wird. Diese Aufgabe wird durch die in den Patentansprüchen enthaltenen Merkmale gelöst.

Die Erfindung basiert auf dem Grundgedanken, die Schichten eines Datenträgers so aufzubauen beziehungsweise zu ergänzen, dass ein im Wesentlichen symmetrischer Schichtaufbau von Lese- und Nichtleseseite eines Datenträgers entsteht. Maßgeblich für die Symmetrie sind die Eigenschaften der eingesetzten Materialien bezüglich der Absorption und/oder der Durchlässigkeit von Luftfeuchte. Wird Feuchtigkeit von den Schichten symmetrisch gleich absorbiert oder abgegeben, dann ergibt sich je nach Wahl der Materialien eine minimale Änderung des Volumens des Datenträgers, jedoch keine Verformung. Erreicht wird dies indem auf der Nicht-Leseseite eines Datenträgers eine zusätzliche Barriereschicht angeordnet wird, die in den Materialeigenschaften hinsichtlich der Absorption und/oder der Durchlässigkeit von Luftfeuchte ähnlich zur reflektierenden Schicht ist. Diese Barriereschicht ist vorzugsweise vor äußeren Beschädigungen mit einer Schutzschicht, ähnlich zur Schutzschicht der reflektierenden Schicht, geschützt. Bei Datenträgern mit mehreren reflektierenden Schichten wird vorzugsweise nur eine Barriereschicht, symmetrisch zur äußersten reflektierenden Schicht auf der Nicht-Leseseite, angeordnet. Da eine reflektierende Schicht im Wesentlichen keine Luftfeuchte absorbiert und auch nicht durchlässt, wirkt diese wie eine Barriereschicht. Die Barriereschicht besteht - ebenso wie die reflektierende Schicht - vorzugsweise aus einem Metall oder einer Metalllegierung. Die Barriereschicht ist vorzugsweise lichtundurchlässig, um beim anschließenden Bedrucken des optischen Datenträgers auf der Nicht-Leseseite einen kontrastreichen Druck ohne Doppelreflexion bzw. parallaxenfrei aufbringen zu können.

Mit einer solchen Maßnahme lässt sich die Leistung eines Datenträgers erheblich verbessern, da keine Beeinträchtigungen wie oben beschrieben auftreten. Folglich wird so eine höhere Integration der Daten ermöglicht, da mit geringeren Auslesefehlern gerechnet werden kann.

Die Erfindung wird nachstehend mit Bezug auf die anliegenden Zeichnungen näher erläutert; es zeigen:
- Figur 1: einen herkömmlichen Datenträger im Querschnitt,
- Figur 2: ein Diagramm zur qualitativen Darstellung der zeitlichen Abhängigkeit der Verformung eines herkömmlichen Datenträgers,
- Figur 3: einen Datenträger mit einer auf der Nicht-Leseseite angeordneten Barriereschicht gemäß der vorliegenden Erfindung,
- Figur 4: einen Datenträger mit einer Barriereschicht und einer darauf angeordneten Schutzschicht gemäß der vorliegenden Erfindung,
- Figur 5: einen Datenträger wie in Figur 4 mit einer zusätzlichen Schutzschicht auf der Leseseite, und
- Figur 6a und 6b: zwei Alternativen von Datenträgern mit mehreren reflektierenden Schichten gemäß der vorliegenden Erfindung.

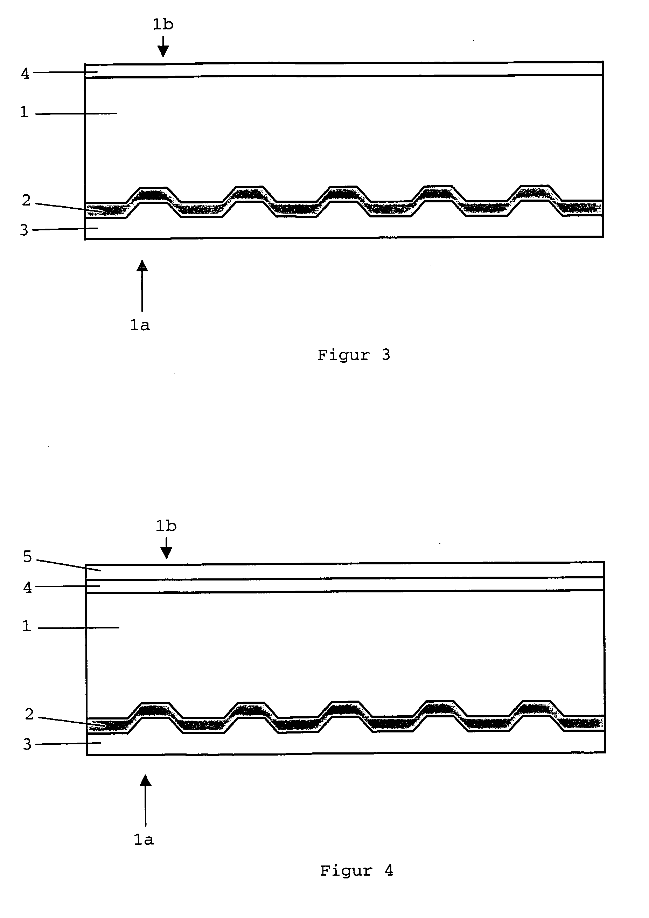

Figur 3 zeigt einen Datenträger mit einer Substratschicht 1, einer zur Leseseite 1a hin angeordneten reflektierenden Schicht 2, und einer auf dieser reflektierenden Schicht 2 angeordneten Schutzschicht 3. Von der Leseseite 1a, die der Nicht-Leseseite 1b gegenüberliegt, werden auf dem Datenträger gespeicherte Daten ausgelesen oder gespeichert. Daten können in bekannter Weise z.B. als Pit-Struktur oder in Phasenänderungen des Schichtmaterials gespeichert bzw. ausgelesen werden, wie bekannt von CD, CD-R, CD-RW, DVD, DVD-R, DVD+R, DVD+RW, DVD-RW und Blu-Ray Disk (BD).

Auf der Nicht-Leseseite 1b ist zusätzlich eine Barriereschicht 4 angeordnet, die feuchtigkeitsundurchlässig ist und/oder keine Feuchte aus der Umgebungsluft absorbiert. Durch diese Maßnahme ist das Substrat 1 von der Leseseite 1a her durch die reflektierende Schicht 2 und von der Nicht-Leseseite 1b her durch die Barriereschicht 4 vor dem Eindringen von Feuchte geschützt beziehungsweise wird Feuchte in gleicher Menge von sowohl der Leseseite 1a als auch der Nicht-Leseseite 1b her absorbiert. So kann zwar eine minimale Veränderung des Volumens des gesamten Datenträgers beziehungsweise einzelner Schichten des Datenträgers auftreten, eine asymmetrische Verformung oder Durchbiegung des Datenträgers wird dabei jedoch verhindert. Vorzugsweise wird Substratmaterial mit geringer Wasseraufnahme verwendet, wodurch auch die Volumenveränderung minimiert werden kann. Die Barriereschicht weist dabei vorzugsweise eine Schichtstärke im Bereich von 1nm - 200nm, stärker bevorzugt von 1nm - 150nm und besonders bevorzugt im Bereich von 5nm - 100nm auf.

Wie in Figur 4 gezeigt, kann auf der Barriereschicht 4 zusätzlich noch eine Schutzschicht 5 angeordnet werden, die zum Schutz der Barriereschicht 4 dient und/oder die Eigenschaften der Leseseite 1a und der Nicht-Leseseite 1b bezüglich der Feuchteabsorption und/oder der Feuchtedurchlässigkeit weiter angleicht. Diese Schutzschicht 5 ist vorzugsweise eine Lackschicht, wie vorzugsweise auch die Schutzschicht 3 der reflektierenden Schicht 2.

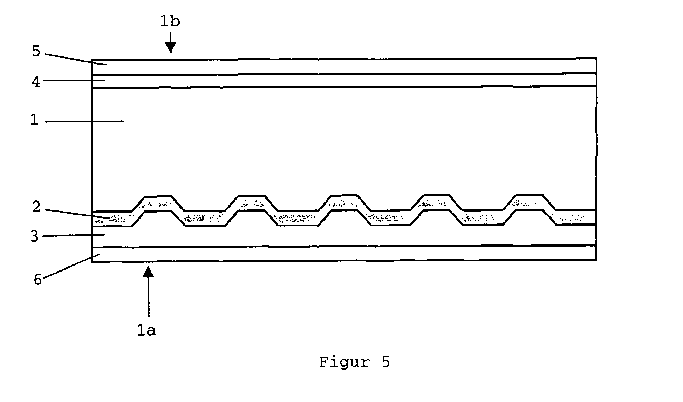

Figur 5 zeigt einen Datenträger wie in Figur 4, der zusätzlich zur Schutzschicht 3 der reflektierenden Schicht 2 eine darauf angeordnete weitere Schutzschicht 6 aufweist, wobei die Schutzschichten 3 und 6 zusammen vorzugsweise eine Schichtstärke im Bereich von 50 *µm* bis 150 µm, stärker bevorzugt im Bereich von 70 *µm* bis 130 *µm* und besonders bevorzugt von 100 µm aufweisen, wobei die Dickentoleranz vorzugsweise ±3 µm betragen sollte. Die Schutzschicht 6 ist härter als die Schutzschicht 3 und vermindert so mögliche Lese- und/oder Schreibbeeinträchtigungen aufgrund von äußeren mechanischen Beeinträchtigungen, wie z.B. Kratzern. Besonders bei Datenträgern mit einer hohen Informationsdichte ist dies von Vorteil beziehungsweise notwendig.

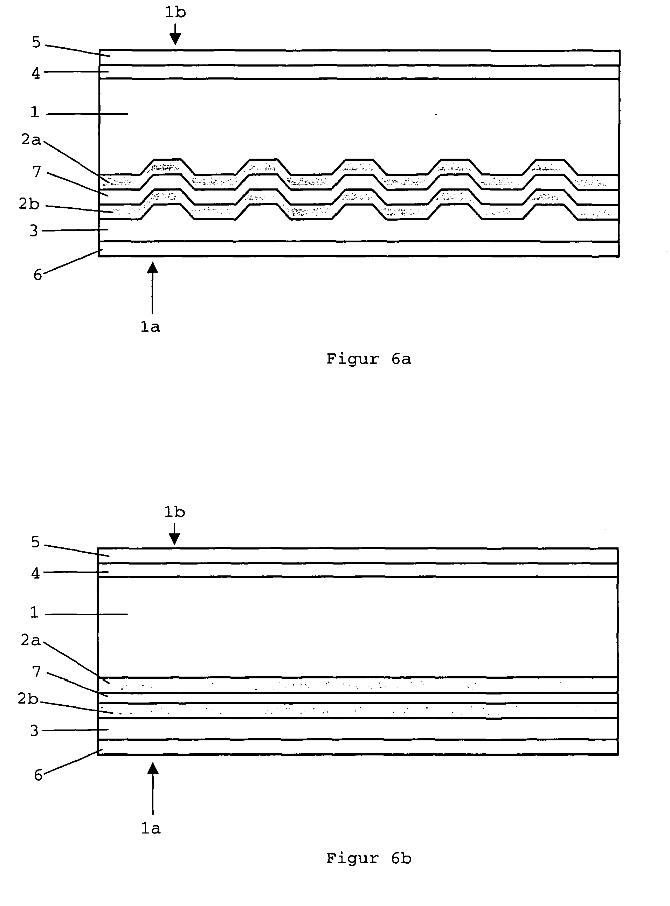

Figur 6a und 6b zeigen zwei alternative erfindungsgemäße Datenträger mit mehreren reflektierenden Schichten. Dabei ist eine im Wesentlichen transparente Abstandsschicht 7 zwischen einer teilreflektierenden Schicht 2b und einer reflektierenden Schicht 2a angeordnet. Bei einem Datenträger mit mehreren reflektierenden Schichten ist im Wesentlichen die erste reflektierende Schicht von der Leseseite 1a her gesehen, in Figur 6 also die Schicht 2b, für die Feuchteabsorption beziehungsweise die Feuchtedurchlässigkeit maßgeblich, weshalb neben der Barriereschicht 4 entsprechend der reflektierenden Schicht 2b keine weitere Barriereschicht auf der Nicht-Leseseite 1b angeordnet werden muss. Die Schichten, die von der reflektierenden Schicht 2a zur Leseseite 1a angeordnet sind, sind im Wesentlichen transparent bzw. teiltransparent (die teilreflektierende Schicht 2b). So kann auch die auf der Schicht 2b gespeicherte Information ausgelesen bzw. geschrieben werden.

Figur 6b entspricht im Wesentlichen dem Aufbau von Figur 6a, wobei jedoch die reflektierenden Schichten nicht auf einer Pit-Struktur angeordnet sind, sondern Informationen in Form von Phasenänderungen des Schichtmaterials, wie zum Beispiel bei CD-RW Medien üblich, gespeichert ist bzw. geschrieben wird.

## Patentansprüche

1. Datenträger, insbesondere optischer Datenträger, mit:
a) einer Substratschicht (1),
b) mindestens einer auf der Leseseite (1a) der Substratschicht (1) angeordneten reflektierenden Schicht (2), die reflektierend oder teilreflektierend ist, und
c) mindestens einer auf der Leseseite (1a) der reflektierenden Schicht (2) angeordneten ersten Schutzschicht (3),
**gekennzeichnet durch**
d) eine auf der der Leseseite (1a) der Substratschicht (1) abgewandten Nicht-Leseseite (1b) angeordnete feuchtigkeitsundurchlässige und/oder nicht feuchteabsorbierende Barriereschicht (4).

2. Datenträger nach Anspruch 1, wobei die Substratschicht(1) eine Pit-Struktur aufweist.

3. Datenträger nach Anspruch 1, wobei die reflektierende Schicht (2) Information aufweist.

4. Datenträger nach Anspruch 1, 2 oder 3, wobei auf der Barriereschicht (4) eine zweite Schutzschicht (5) angeordnet ist.

5. Datenträger nach einem der vorstehenden Ansprüche, wobei zumindest die äußeren Schichten sich im Wesentlichen symmetrisch gegenüberliegen und jeweils im Wesentlichen die gleichen Eigenschaften bei der Absorption bzw. Durchlässigkeit von Feuchte aufweisen.

6. Datenträger nach einem der Ansprüche 1 bis 4, wobei die erste Schutzschicht (3) und die zweite Schutzschicht (5) und/oder die Barriereschicht (4) und die reflektierende Schicht (2) im Wesentlichen die gleichen Eigenschaften bei der Absorption bzw. Durchlässigkeit von Feuchte aufweisen.

7. Datenträger nach einem der vorstehenden Ansprüche, wobei die reflektierende Schicht (2) aus einem Metall oder einer Metalllegierung besteht.

8. Datenträger nach einem der vorstehenden Ansprüche, wobei die Barriereschicht (4) aus einem Metall oder einer Metalllegierung besteht.

9. Datenträger nach einem der vorstehenden Ansprüche, wobei das Material der Barriereschicht (4) gleich dem der reflektierenden Schicht (2) ist.

10. Datenträger nach einem der vorstehenden Ansprüche, wobei zusätzlich auf der Leseseite (1a) eine weitere Schutzschicht (6) angeordnet ist.

11. Datenträger nach Anspruch 10, wobei die Schutzschichten (3, 6) zusammen eine Schichtstärke vorzugsweise im Bereich von 50µm - 150µm, stärker bevorzugt im Bereich von 70µm - 130µm und besonders bevorzugt von 100µm aufweisen.

12. Datenträger nach einem der vorstehenden Ansprüche, wobei die Barriereschicht (4) vorzugsweise eine Schichtstärke im Bereich von 1nm - 200nm, stärker bevorzugt von 1nm - 150nm und besonders bevorzugt im Bereich von 5nm - 100nm aufweist.

13. Datenträger nach einem der vorstehenden Ansprüche, wobei die Barriereschicht (4) lichtundurchlässig ist.

14. Datenträger nach einem der vorstehenden Ansprüche, wobei zwischen zwei reflektierenden Schichten (2a, 2b) eine im Wesentlichen transparente Abstandsschicht (7) angeordnet ist.

15. Datenträger nach einem der vorstehenden Ansprüche, wobei zumindest die von der reflektierenden Schicht (2a) hin zur Leseseite (1a) angeordneten Schichten im Wesentlichen transparent beziehungsweise teiltransparent sind.

16. Datenträger nach einem der vorstehenden Ansprüche, wobei der Datenträger ein scheibenförmiger, optischer Datenträger ist.

17. Datenträger nach einem der vorstehenden Ansprüche, wobei der Datenträger eine scheibenförmiger, optischer Datenträger mit mehreren reflektierenden Schichten ist.

18. Datenträger nach einem der vorstehenden Ansprüche, wobei der Datenträger eine Blu-Ray Disk ist.
